# EUROPÄISCHE PATENTSCHRIFT

(11) **EP 2 552 631 B1**
(45) Veröffentlichungstag und Bekanntmachung des Hinweises auf die Patenterteilung: **29.04.2015**
(21) Anmeldenummer: 11702001.6
(22) Anmeldetag: 27.01.2011
(51) Int. Cl.: B23D 59/02, B23D 61/02

(54) **HYDRODYNAMISCH GEFÜHRTES KREISSÄGEBLATT**
HYDRODYNAMICALLY GUIDED CIRCULAR SAW BLADE
LAME DE SCIE CIRCULAIRE À GUIDAGE HYDRODYNAMIQUE

(30) Priorität: 26.03.2010 DE 102010016153
(43) Veröffentlichungstag der Anmeldung: 06.02.2013
(73) Patentinhaber: Friedrichs, Arno, 95326 Kulmbach (DE)
(72) Erfinder: Friedrichs, Arno, 95326 Kulmbach (DE)
(74) Vertreter: Eichstädt, Alfred
(86) Internationale Anmeldenummer: PCT/EP2011/051118
(87) Internationale Veröffentlichungsnummer: WO 2011/117002

(56) Entgegenhaltungen:
- EP-A1- 0 393 989
- DE-A1-102007 022 310
- DE-U1- 29 901 713
- US-A1- 2008 210 212

## Beschreibung

Die Erfindung betrifft ein Kreissägeblatt gemäß dem Oberbergriff des Anspruchs 1, welches Kühlkanäle aufweist, durch welche während des Sägebetriebes Kühlflüssigkeit in den Arbeitsbereich des Kreissägeblattes transportiert werden kann und im Bereich der Zahngründe oder der Flanken der Zähne des Kreissägeblattes aus dem Kreissägeblatt austritt, um den Arbeitsbereich zu kühlen.

Aus der DE 10 2007 022 310 A1 ist bereits ein Kreissägeblatt mit in Radialrichtung verlaufenden Kühlkanälen bekannt, welches einteilig ist und aus Hartmetall, Stahl oder Keramik besteht. Am Außenumfang des Kreissägeblattes sind Zähne derart in das Kreissägeblatt eingebracht, dass die Austrittsöffnungen der Kühlkanäle im Bereich der Zahngründe oder der Flankenmitten der Zähne des Kreissägeblattes liegen.

Aus der US 2008/210212 A1 ist ein Kreissägeblatt bekannt, welches einen Tragkörper, im inneren Bereich des Tragkörpers vorgesehene, in Radialrichtung verlaufende Kühlkanäle und im Bereich des Außenumfangs des Tragkörpers vorgesehene Zähne aufweist. Die Kühlkanäle.treten im Bereich der Zahngründe oder im Bereich der Flanken der Zähne aus dem Kreissägeblatt aus. Das Kreissägeblatt weist auf beiden Seiten Taschen auf, die sich jeweils ausgehend von einem Zahngrund oder einer Flanke eines Zahnes nach innen bis in den Bereich des Tragkörpers erstrecken, um aus den Kühlkanälen austretende Kühlflüssigkeit in den Bereich des Tragkörpers zu leiten.

Ein Nachteil bekannter Kreissägeblätter besteht darin, dass während des Sägevorganges Vibrationen des Kreissägeblattes auftreten, die die Qualität des Sägevorganges beeinträchtigen. Insbesondere sind die Kanten des zersägten Gegenstandes vergleichsweise rauh.

Die Aufgabe der Erfindung besteht darin, ein Kreissägeblatt anzugeben, bei dessen Verwendung der vorstehend beschriebene Nachteil reduziert ist.

Diese Aufgabe wird durch ein Kreissägeblatt mit den im Anspruch 1 angegebenen Merkmalen gelöst. Vorteilhafte Ausgestaltungen und Weiterbildungen der Erfindung sind in den abhängigen Patentansprüchen angegeben.

Die Vorteile der Erfindung bestehen insbesondere darin, dass im Betrieb eines erfindungsgemäßen Kreissägeblattes die Vibrationen des Kreissägeblattes im Vergleich zum Stand der Technik reduziert sind. Dadurch wird in vorteilhafter Weise die Qualität des Sägevörgangs erhöht. Die Kanten des zersägten Gegenstandes sind glatter als im Falle einer Verwendung eines Kreissägeblattes gemäß dem Stand der Technik. Diese Vorteile werden im Wesentlichen dadurch erreicht, dass während des Sägebetriebes die aus dem Kreissägeblatt austretende Kühlflüssigkeit nicht nur zur Kühlung des Arbeitsbereiches des Kreissägeblattes verwendet wird, sondern auch dazu verwendet wird, einen Flüssigkeitsfilm zu bilden, der das Kreissägeblatt während des Sägevorganges führt. Dadurch werden die Vibrationen des Kreissägeblattes während des Sägevorganges gedämpft. Dies erhöht die Qualität des Sägevorganges und führt zu vergleichsweise glatten Kanten des zersägten Gegenstandes.

Weitere Vorteile der Erfindung bestehen darin, dass durch die Innenkühlung des Kreissägeblattes eine Verschleißminderung auftritt. Dieser Vorteil ist darauf zurückzuführen, dass das Kreissägeblatt im Arbeitsbereich stets ausreichend gekühlt wird und dadurch keinen Kolkverschleiß erfährt.

Nachfolgend wird die Erfindung anhand der Figuren beispielhaft erläutert. Es zeigt
- Figur 1: eine Skizze eines Kreissägeblattes gemäß einem ersten Ausführungsbeispiel für die Erfindung und
- Figur 2: eine Skizze eines Kreissägeblattes gemäß einem zweiten Ausführungsbeispiel für die Erfindung.

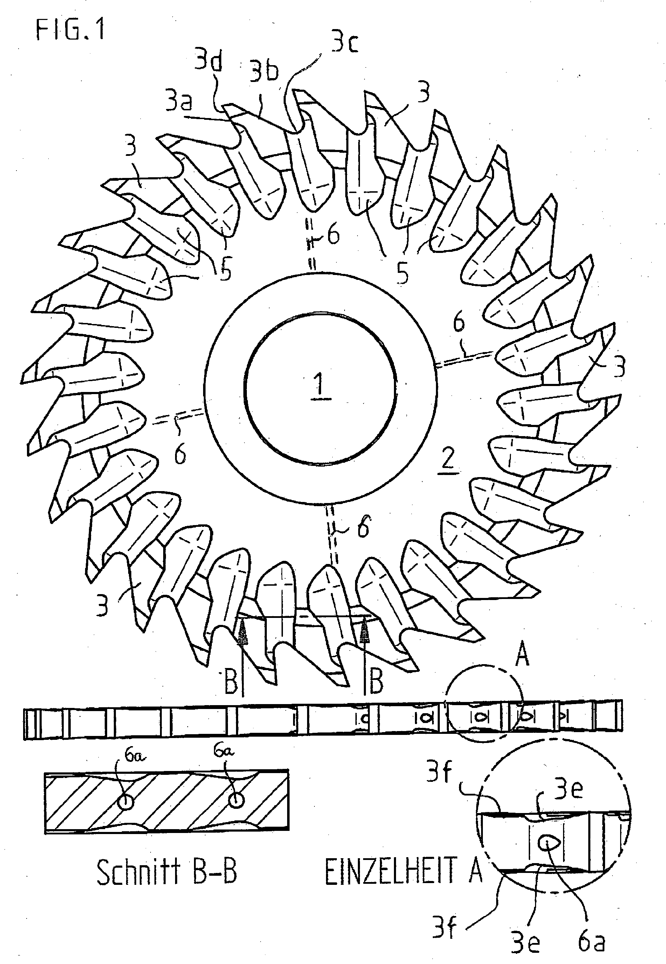

Die Figur 1 zeigt eine Skizze eines Kreissägeblattes gemäß einem ersten Ausführungsbeispiel für die Erfindung. Dieses Kreissägeblatt weist in seinem mittleren Bereich eine zentrale Bohrung 1 auf, so dass das Kreissägeblatt auf einer Welle einer Kreissäge befestigt werden kann. Des Weiteren umfasst das Kreissägeblatt einen Tragkörper 2, der aus Hartmetall, Keramik oder Stahl besteht. Im inneren Bereich des Tragkörpers 2 ist eine Vielzahl von in Radialrichtung verlaufenden Kühlkanälen 6 vorgesehen, wobei in der Figur 1 nur vier dieser Kühlkanäle mit gestrichelten Linien angedeutet sind.

Im Bereich des Außenumfangs des Tragkörpers 2 ist eine Vielzahl von Zähnen 3 vorgesehen, die jeweils eine Vorderflanke 3a, eine Rückflanke 3b, einen Zahngrund 3c, eine Schneidkante 3d, einen verschmälerten Bereich 3e und einen sich wieder verbreiternden Bereich 3f aufweisen.

Durch die Kühlkanäle 6 wird im Sägebetrieb Kühlflüssigkeit in den Arbeitsbereich des Kreissägeblattes geleitet und tritt dort aus dem Kreissägeblatt entweder im Bereich der Zahngründe 3c oder im Bereich der Zahnflanken 3b aus dem Kreissägeblatt aus.

Mittels dieser Kühlflüssigkeit erfolgt eine Kühlung des Arbeitsbereiches des Kreissägeblattes.

Bei einem Kreissägeblatt gemäß der vorliegenden Erfindung wird die Kühlflüssigkeit nicht nur zur Kühlung des Arbeitsbereiches des Kreissägeblattes verwendet, sondern auch zum Aufbau eines das Kreissägeblatt während des Sägevorganges führenden Flüssigkeitsfilmes. Um dies zu ermöglichen weist das Kreissägeblatt Taschen 5 auf, die sich jeweils ausgehend von einem Zahngrund 3c oder einer Flanke 3b eines Zahnes 3 nach innen bis in de Bereich des Tragkörpers 2 erstrecken. Diese Taschen sind bei dem in der Figur 1 gezeigten Ausführungsbeispiel sackförmig ausgebildet. Sie haben die Aufgabe, die aus den Kühlkanälen 6 austretende Kühlflüssigkeit gezielt in den Bereich hinter die Schneidkante 3d des jeweiligen Zahnes und auch in den Bereich des Tragkörpers 2 des Kreissägeblattes zu leiten. Die genannten Taschen sind auf beiden Seiten des Kreissägeblattes vorgesehen.

Durch das gezielte Leiten der aus den Kühlkanälen 6 austretende Kühlfüssigkeit in den Bereich hinter die Schneidkante 3d des jeweiligen Zahnes und in den Bereich des Tragkörpers 2 wird erreicht, dass dort beidseits des Kreissägeblattes jeweils ein das Kreissägeblatt führender Flüssigkeitsfilm aufgebaut wird. Durch diese hydrodynamische Führung des Kreissägeblattes werden im Sägebetrieb auftretende Vibrationen des Kreissägeblattes gedämpft, so dass die Kanten bzw. Ränder des jeweils zersägten Gegenstandes vergleichsweise glatt ausgebildet sind. Dies entspricht einer deutlichen Steigerung der Qualität des Sägevorganges.

Um den beschriebenen Führungseffekt des Kreissägeblattes durch den Aufbau eines Flüssigkeitsfilmes weiter zu verbessern weisen die Zähne 3 jeweils im Bereich hinter der Schneidkante 3d einen verschmälerten Bereich 3e und einen sich in Richtung des Nachbarzahnes wieder verbreiternden Bereich 3f auf. Dies ist insbesondere aus der in der Figur 1 rechts unten gezeigten Einzelheit A erkennbar. Dort ist mit der Bezeichnung 6a die Austrittsöffnung eines Kühlkanales aus dem Kreissägeblatt bezeichnet. In der Figur 1 links unten ist ein Schnitt längs der Schnittlinie B-B des Kreissägeblattes gezeigt, oberhalb davon eine Ansicht der Schmalseite des Kreissägeblattes.

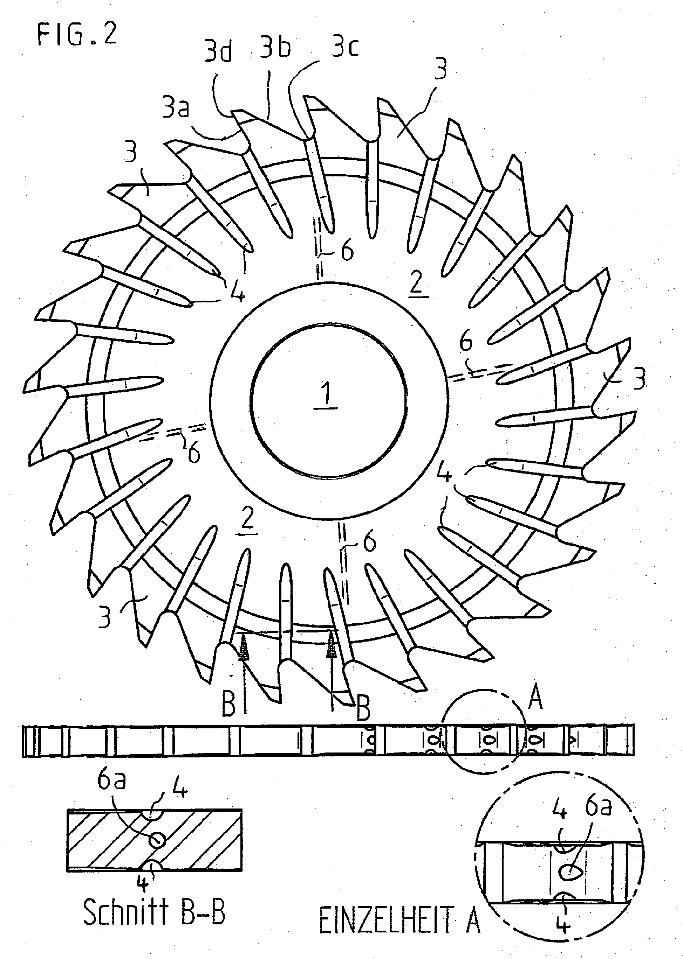

Die Figur 2 zeigt eine Skizze eines Kreissägeblattes gemäß einem zweiten Ausführungsbeispiel für die Erfindung. Auch dieses Kreissägeblatt weist in seinem mittleren Bereich eine zentrale Bohrung 1 auf, so dass das Kreissägeblatt auf einer Welle einer Kreissäge befestigt werden kann. Des Weiteren umfasst das Kreissägeblatt einen Tragkörper 2, der aus Hartmetall, Keramik oder Stahl besteht. Im inneren Bereich des Tragkörpers 2 ist eine Vielzahl von in Radialrichtung verlaufenden Kühlkanälen 6 vorgesehen, wobei in der Figur 2 nur vier dieser Kühlkanäle mit gestrichelten Linien angedeutet sind.

Im Bereich des Außenumfangs des Tragkörpers 2 ist eine Vielzahl von Zähnen 3 vorgesehen, die jeweils eine Vorderflanke 3a, eine Rückflanke 3b, einen Zahngrund 3c, eine Schneidkante 3d, einen verschmälerten Bereich 3e und einen sich wieder verbreiternden Bereich 3f aufweisen.

Durch die Kühlkanäle 6 wird im Sägebetrieb Kühlflüssigkeit in den Arbeitsbereich des Kreissägeblattes geleitet und tritt dort aus dem Kreissägeblatt im Bereich der Zahngründe 3c aus dem Kreissägeblatt aus.

Mittels dieser Kühlflüssigkeit erfolgt eine Kühlung des Arbeitsbereiches des Kreissägeblattes.

Bei einem Kreissägeblatt gemäß der vorliegenden Erfindung wird die Kühlflüssigkeit nicht nur zur Kühlung des Arbeitsbereiches des Kreissägeblattes verwendet, sondern auch zum Aufbau eines das Kreissägeblatt während des Sägevorganges führenden Flüssigkeitsfilmes. Um dies zu ermöglichen weist das Kreissägeblatt Taschen 4 auf, die sich jeweils ausgehend von einem Zahngrund 3c eines Zahnes 3 nach innen bis in den Bereich des Tragkörpers 2 erstrecken. Diese Taschen sind bei dem in der Figur 2 gezeigten Ausführungsbeispiel stiftförmig ausgebildet. Sie haben die Aufgabe, die aus den Kühlkanälen 6 austretende Kühlflüssigkeit gezielt in den Bereich des Tragkörpers 2 des Kreissägeblattes zu leiten. Die genannten Taschen sind auf beiden Seiten des Kreissägeblattes vorgesehen.

Durch das gezielte Leiten der aus den Kühlkanälen 6 austretenden Kühlfüssigkeit in den Bereich des Tragkörpers 2 wird erreicht, dass dort beidseits des Kreissägeblattes jeweils ein das Kreissägeblatt führender Flüssigkeitsfilm aufgebaut wird. Durch diese hydrodynamische Führung des Kreissägeblattes werden im Sägebetrieb auftretende Vibrationen des Kreissägeblattes gedämpft, so dass die Kanten bzw. Ränder des jeweils zersägten Gegenstandes vergleichsweise glatt ausgebildet sind. Dies entspricht einer deutlichen Steigerung der Qualität des Sägevorganges.

Bei diesem zweiten Ausführungsbeispiel wird der das Kreissägeblatt führende und Vibrationen des Kreissägeblattes reduzierende Flüssigkeitsfilm lediglich im Bereich des Tragkörpers aufgebaut. Dadurch bedarf es lediglich einer Vielzahl von Taschen, die von den Austritts öffnungen der Kühlflüssigkeit in den Bereich des Tragkörpers führen. Eine Verschmälerung der Zähne in ihrem Bereich hinter der Schneidkante ist bei diesem Ausführungbeispiel entbehrlich.

Ohne eine solche Verschmälerung ist dieses Ausführungsbeispiel über nicht gemäß der Erfindung.

### Bezugszeichenliste

- 1: zentrale Bohrung
- 2: Tragkörper
- 3: Zahn
- 3a: Vorderflanke eines Zahnes
- 3b: Rückflanke eines Zahnes
- 3c: Zahngrund
- 3d: Schneidkante eines Zahnes
- 3e: verschmälerter Bereich eines Zahnes
- 3f: wieder verbreiternder Bereich eines Zahnes
- 4: stiftförmige Tasche
- 5: sackförmige Tasche
- 6: Kühlkanal
- 6a: Austrittsöffnung eines Kühlkanals

## Patentansprüche

1. Kreissägeblatt, welches einen Tragkörper (2), im inneren Bereich des Tragkörpers vorgesehene, in Radialrichtung verlaufende Kühlkanäle (6) und im Bereich des Außenumfangs des Tragkörpers vorgesehene Zähne (3) aufweist, wobei die Kühlkanäle (6) im Bereich der Zahngründe (3c) oder im Bereich der Flanken (3b) der Zähne aus dem Kreissägeblatt austreten, und welches auf beiden Seiten des Kreissägeblattes vorgesehene Taschen (4,5) aufweist, die sich jeweils ausgehend von einem Zahngrund (3c) oder einer Flanke (3b) eines Zahnes (3) nach innen bis in den Bereich des Tragkörpers (2) erstrecken, um aus den Kühlkanälen (6) austretende Kühlflüssigkeit in den Bereich des Tragkörpers zu leiten, **dadurch gekennzeichnet, dass** die Zähne (3) jeweils im Bereich hinter der Schneidkante (3d) einen verschmälerten Bereich (3e) aufweisen und ausgehend vom verschmälerten Bereich in Richtung des Nachbarzahnes einen sich wieder verbreiternden Bereich (3f) aufweisen.

2. Kreissägeblatt nach Anspruch **1, dadurch gekennzeichnet, dass** die Taschen (5) sackförmig ausgebildet sind.

3. Kreissägeblatt nach Anspruch 1, **dadurch gekennzeichnet, dass** die Taschen (4) stiftförmig ausgebildet sind.

## Claims

1. Circular saw blade, which comprises a carrier body (2), cooling channels (6) provided in the inner region of the carrier body and extending in radial direction, and teeth (3) provided in the region of the outer circumference of the carrier body, wherein the cooling channels (6) emerge from the circular saw blade in the region of the teeth bases (3c) or in the region of the flanks (3b) of the teeth, and which has pockets (4), (5) which are provided on both sides of the circular saw blade and which, respectively starting from a tooth base (3c) or a flank (3b) of a tooth (3), extend inwardly to the region of the support body (2) in order to conduct cooling liquid, which issues from the cooling channels (6), into the region of the carrier body, **characterised in that** the teeth (3) each have a narrowed region (3) in the region behind the cutting edge (3d) and starting from the narrowed region in the direction of the neighboring tooth a region (3f) which widens again.

2. Circular saw blade according to claim 1, **characterised in that** the pockets (5) are of bag-shaped construction.

3. Circular saw blade according to claim 1, **characterised in that** the pockets (4) are of pin-shaped construction.

## Revendications

1. Lame de scie circulaire qui présente un corps porteur (2), des canaux de refroidissement (6) s'étendant dans le sens radial, prévus dans la zone intérieure du corps porteur et des dents (3) prévues dans la zone de la périphérie extérieure du corps porteur, les canaux de refroidissement (6) sortant de la lame de scie circulaire dans la zone des bases de dents (3c) ou dans la zone des flancs (3b) des dents, et qui présente des poches (4, 5) prévues des deux cotés de la lame de scie circulaire qui s'étendent respectivement à partir d'une base de dent (3c) ou d'un flanc (3b) d'une dent (3) vers l'intérieur jusque dans la zone du corps porteur (2) afin de mener du liquide de refroidissement sortant des canaux de refroidissement (6) dans la zone du corps porteur, **caractérisée en ce que** les dents (3) présentent respectivement dans la zone derrière l'arête de coupe (3d) une zone rétrécie (3e) et présentent à partir de la zone rétrécie en direction de la dent voisine une zone (3f) s'élargissant à nouveau.

2. Lame de scie circulaire selon la revendication 1, **caractérisée en ce que** les poches (5) sont réalisées en forme de sac.

3. Lame de scie circulaire selon la revendication 1, **caractérisée en ce que** les poches (4) sont réalisées en forme de goupille.
